Europäisches Patentamt

European Patent Office

Office européen des brevets

(11) Veröffentlichungsnummer: **0 097 732**

**A1**

(12) # EUROPÄISCHE PATENTANMELDUNG

(21) Anmeldenummer: 82105674.4

(22) Anmeldetag: 26.06.82

(51) Int. Cl.³: **B 62 D 1/22**
**B 60 K 17/04**

(43) Veröffentlichungstag der Anmeldung:
11.01.84 Patentblatt 84/2

(84) Benannte Vertragsstaaten:
AT BE CH DE FR GB IT LI LU NL SE

(71) Anmelder: Martin Beilhack Maschinenfabrik und
Hammerwerk GmbH
Am Hammer 11-13
D-8200 Rosenheim(DE)

(72) Erfinder: Beilhack, Wilhelm, Dipl.-Kfm.
Prinzregentenstrasse 135
D-8200 Rosenheim(DE)

(74) Vertreter: Flach, Dieter Rolf Paul, Dipl.-Phys. et al,
Patentanwälte Dipl.-Phys. Dieter Flach Dipl.-Chem. Dr.
Steffen Andrae, Dipl.-Ing. Dietmar Haug, Dipl.-Ing. Dr.
Dieter Otto Max-Josefs-Platz 6
D-8200 Rosenheim(DE)

(54) Fahrzeug für anbaubares schweres Arbeitsgerät.

(57) Ein Fahrzeug für ein anbaubares schweres Arbeitsgerät
(1), insbesondere ein Schneeräumgerät, weist im Bereich
eines Fahrzeugendes eine auf eine Fahrzeugachse wirkende
Radlenkung mit einer Fahrerkabine (5) auf, welche benachbart der gelenkten Fahrzeugachse (7) vorgesehen ist. Das
schwere Arbeitsgerät ist auf dem der gelenkten Fahrzeugachse (7) gegenüberliegenden Ende des Fahrzeuges anbaubar, wobei das Fahrzeug im Arbeitsbetrieb in entgegengesetzter Richtung zum konventionellen Fahrbetrieb gelenkt
wird. Dazu ist eine zweite Lenkeinrichtung (45) für die
gelenkte Fahrzeugachse (7) vorgesehen, die unmittelbar in
der Nähe der ersten Lenkeinrichtung (43) angeordnet ist. Die
Achsen (7, 11) werden über Umschalt- und ein Wechselgetriebe (15, 17) angetrieben, wobei im Kriechgang die Triebverbindung vom Primärantriebsmotor (13) zum Wechselgetriebe (17) ausschließlich über das ein Hydrostatantrieb
umfassende Umschaltgetriebe (15) erfolgt.

EP 0 097 732 A1

Croydon Printing Company Ltd.

PATENTANWÄLTE

# ANDRAE · FLACH · HAUG · OTTO 0097732

EUROPEAN PATENT ATTORNEYS

· Patentanwalt Dipl.-Phys. Flach, Max-Josefs-Platz 6, D-8200 Rosenheim ·

ROSENHEIM
Dipl.-Phys. Dieter Flach
Max-Josefs-Platz 6
D-8200 Rosenheim
Telefon: (0 80 31) 1 93 52
Telegramm: Physicist Rosenheim

MÜNCHEN
Dipl.-Chem. Dr. Steffen Andrae
Dipl.-Ing. Dietmar Haug
Dipl.-Ing. Dr. Dieter Otto
Steinstraße 44
D-8000 München 80
Telefon: (0 89) 48 20 89
Telegramm: pagema München
Telex: 5 216 281 afho d

Firma Martin Beilhack Maschinenfabrik und Hammerwerk GmbH, Am Hammer 11 - 13, 8200 Rosenheim


120 P 115

-----------------------------------------------------

Fahrzeug für anbaubares schweres Arbeitsgerät

-----------------------------------------------------

Bei bekannten Fahrzeugen, insbesondere Nutzfahrzeugen,
ist das Arbeitsgerät, beispielsweise eine Schneeschleuder,
eine Schneefräse oder ein Schneepflug an dem der gelenkten Fahrzeugachse benachbarten Fahrzeugende angebracht. Die Aufhängung erfolgt über eine Anbauplatte,
wobei das Arbeitsgerät über eine nach vorne verlaufende Zapfwelle angetrieben wird.

Heutzutage werden jedoch zunehmend schwerere Arbeitsgeräte eingesetzt. Als problematisch erweist sich dabei, daß

- 2 -

**0097732**

- 2 -

bei herkömmlichen Nutzfahrzeugen im Durchschnitt die Vorderachse nur bis zu 6,5 oder maximal 7t belastbar ist. Dadurch sind die Höchstgewichte für das aufzuhängende Arbeitsgerät begrenzt, wenn nicht auf Spezialfahrzeuge mit einer höher belastbaren Vorderachse zurückgegriffen werden soll, wodurch allerdings die Kosten eines derartigen Fahrzeuges ganz erheblich gegenüber serienmässigen Fahrzeugen ansteigen. ..

Darüber hinaus ist aber auch ein Straßenschneeräumfahrzeug mit angebautem Räumgerät gemäß dem Oberbegriff des Anspruchs 1 bekannt geworden, bei dem ein Räumgerät, beispielsweise eine Schneefräse auf dem der Fahrerkabine gegenüberliegenden Ende des Fahrzeuges angebracht ist. Abgesehen davon, daß sich hierdurch Vorteile auch bei angebautem Räumgerät im Schneeräumeinsatz bezüglich guter Lenkungseigenschaften ergeben, lassen sich bei dieser Anordnung auch Arbeitsgeräte mit Gewichten bis 13t am Nutzfahrzeug aufhängen, ohne daß hierzu spezielle, nicht serienmässig vorhandene Hinterachsen verwendet werden müssen.

Bei dem aus der DE-AS 24 29 005 bekannten Straßenschneeräumfahrzeug ist an dem von der gelenkten Fahrzeugachse entfernten Fahrzeugende, an dem das Arbeitsgerät angebaut ist, eine entgegengesetzt zu der Fahrerkabine ausgerichtete zusätzliche Fahrerkabine mit einer gesonderten Lenkeinrichtung für die gelenkte Fahrzeugachse vorgesehen. Im Arbeitsbetrieb wird somit das Straßenschneeräumfahrzeug entgegengesetzt zur sonst üblichen Vorwärtsrichtung in Rückwärtsrichtung angetrieben.

- 3 -

In diesem Arbeitsbetrieb erfolgt die Lenkung über
die nunmehr in Fahrtrichtung hinten liegende
gelenkte Fahrzeugachse, wobei der Fahrer in der
zweiten vorgesehenen Fahrerkabine den Räumvorgang
leicht steuern kann.

Darüber hinaus ist bei diesem bekannten Schneeräumfahrzeug zwischen den beiden Fahrerkabinen auf dem
sonst üblichen Laderaum ein großer Primärantriebsmotor für den Antrieb des Fahrzeugs in Vorwärts- und
Rückwärtsrichtung vorgesehen. Dazu wird über den Primärantriebsmotor eine Druckmittelpumpe betätigt, über die
zum einen ein Druckmittelmotor und davon wiederum ausgehend über eine Kardanwelle Vorder- und/oder Hinterräder des Fahrzeugs antreibbar sind. Über einen zweiten
vorgesehenen Druckmittelmotor, der ebenfalls über die
Druckmittelpumpe betätigbar ist, wird über eine zweite
Kardanwelle beispielsweise eine Schneefräse angetrieben. Durch die gesamte Anordnung wird also ein Spezialfahrzeug mit einer festinstallierten zweiten Fahrerkabine am gegengesetzten Ende zur ersten Fahrerkabine
des Fahrzeugs mit einem zwischen beiden auf dem
Chassis des Fahrzeuges angeordneten Primärantriebsmotor geschaffen. Die Herstellung eines solchen Fahrzeuges
erfordert aber sehr bauintensive Umrüstungsmaßnahmen,
wodurch hohe Herstellungskosten bedingt sind. Ferner
ist dieses Spezialfahrzeug für weitere herkömmliche
Aufgaben als Nutzfahrzeug nicht verwendbar.

Aufgabe der Erfindung ist es, deshalb ein Fahrzeug
für ein anbaubares schweres Arbeitsgerät, insbesondere
Schneeräumgerät, ausgehend von einem serienmässigen

- 4 -

Firma Martin Beilhack 120 P 115 **0097732**

- 4 -

Nutzkraftfahrzeug zu schaffen, das als Nutzkraftfahrzeug auch für herkömmliche Aufgaben und Einsätze
verwendbar ist.

Die Aufgabe wird erfindungsgemäß entsprechend den
im kennzeichnenden Teil des Anspruchs 1 angegebenen Merkmale gelöst. Vorteilhafte Ausgestaltungen
der Erfindung sind in den Unteransprüchen angegeben.

Durch die Erfindung wird ein Fahrzeug für ein anbaubares schweres Arbeitsgerät geschaffen, das auf
einfache und kostengünstige Weise durch entsprechende Ausrüstung eines serienmässigen Lastwagens erhalten werden kann. Dies betrifft jene Fahrzeuge,
an denen schwere Arbeitsgeräte, beispielsweise
eine Schneeschleuder, eine Schneefräse oder ein
Schneepflug mit Gewichten von mehr als ca. 6,5 oder
7t angebaut werden sollen. Durch den Anbau des
Arbeitsgerätes an der hinteren Fahrzeugachse müssen keine zusätzlichen für höhere Traglasten ausgelegte Achsen verwendet werden, so daß ein serienmässiger Lastkraftwagen verwendet werden kann. Vor
allem aber dadurch, daß die zweite Lenkeinrichtung
mit den dazugehörigen Bedien- und Überwachungselementen
unmittelbar in der Nähe der ersten Lenkeinrichtung,
jedoch auf das rückwärtige Ende des Fahrzeuges
versetzt angeordnet und in Rückwärtsfahrtrichtung
ausgerichtet ist, läßt sich der Lastkraftwagen
im Arbeitsbetrieb über die zweite Lenkeinrichtung
in optimaler Weise lenken und beim konventionellen Fahrbetrieb, also bei nicht im Einsatz befindlichen Arbeitsgerät, in üblicher Weise in Vor-

- 5 -

Firma Martin Beilhack 120 P 119 0097732

- 5 -

wärtsrichtung fahren. Es versteht sich von selbst,
daß der Einbau einer zweiten Lenkeinrichtung mit den
Bedien- und Überwachungselementen mit vergleichsweise
einfachen Mitteln zu bewerkstelligen ist.

Darüber hinaus erfolgt der Antrieb des Fahrzeuges
sowohl in Vorwärtsfahrtrichtung wie in der in entgegengesetzter Richtung verlaufenden Arbeitsfahrtrichtung über einen Primärantriebsmotor, beispielsweise einen Dieselmotor, der bei dem jeweiligen
serienmässigen Fahrzeug in der Regel unter dem
Fahrerhaus angeordnet ist. Dieser Primärantriebsmotor dient sowohl zum Antrieb des Fahrzeuges
selbst als auch zum Antrieb des Arbeitsgerätes, beispielsweise der Schneeschleuder oder Schneefräse.

Durch das erfindungsgemässe Fahrzeug wird also erstmals unter erheblichen technischen Vereinfachungen
die Möglichkeit geschaffen, daß ohne zu aufwendige
Umrüstmaßnahmen schwere Arbeitsgeräte angebaut und
angetrieben werden können. Bisher mußten hierfür Spezialfahrzeuge eingesetzt werden, die natürlich abgesehen von den baulichen Erfordernissen auch zu
Kostenerhöhungen geführt haben.

Vor allem aber wird bei dem erfindungsgemässen Fahrzeug sichergestellt, daß das Chassis unbebaut ist und
somit das Fahrzeug auch im üblichen Betrieb als
Nutzkraftwagen beispielsweise bei einem Baustelleneinsatz verwendet werden kann.

- 6 -

In einer vorteilhaften Ausgestaltung der Erfindung nach Anspruch 2 sind beide Lenkeinrichtungen in einer einzigen Fahrerkabine untergebracht. Auch dies läßt sich wiederum sowohl technisch einfach als finanziell kostengünstig bewerkstelligen, da auf dem Markt eine Vielzahl von serienmässig erhältlichen, entsprechend großen Fahrerkabinen vorhanden sind.

In einer bevorzugten Ausführungsform nach Anspruch 3 werden in an sich bekannter Weise die Räder des Fahrzeuges über ein Umschalt- und ein Wechselgetriebe angetrieben, wobei im Kriechgang die Triebverbindung von dem Primärantriebsmotor zum Wechselgetriebe ausschließlich über das ein Hydrostatantrieb umfassende Umschaltgetriebe erfolgt. Zusätzlich geht vom Umschaltgetriebe eine Zapfwelle zum Antrieb des Arbeitsgerätes aus, wobei die Zapfwelle zum hinteren Ende des Fahrzeuges geführt ist.

Durch diese Anordnung wird nicht nur eine raumsparende und bei jedem serienmässigen Nutzfahrzeuge vorzunehmende günstige Unterbringung des Hydraulikwandlers erreicht, sondern es wird weiterhin sichergestellt, daß jeder einzelne Gang des Wechselgetriebes und nicht nur ein einziger Gang durch den hydrostatischen Wandler angetrieben werden kann. Durch diesen Vorteil ist dann ein mit dem erfindungsgemässen Hydraulikwandler ausgestattetes Nutzfahrzeug einem von vornherein für hydraulischen Kriechgangantrieb ausgelegtes Spezialfahrzeug ebenbürtig.

In einer Weiterbildung nach Anspruch 4 ist in entgegengesetzter Verlängerung der zum hinteren Ende führenden Zapfwelle eine zweite, in Richtung auf das Fahrerhaus führende Zapfwelle vorgesehen. Dadurch ergibt sich weiterhin die Möglichkeit, daß bei dem erfindungsgemässen Fahrzeug in üblicher Weise auch leichte Arbeitsgeräte im Bereich der gelenkten Fahrzeugachse angebaut und angetrieben werden können. Dadurch ergibt sich ein vielfältiger Arbeitseinsatz des erfindungsgemässen Fahrzeuges.

Nach Anspruch 5 ist in einer vorteilhaften Ausgestaltung der Erfindung ein separates bzw. ein Teil des Umschaltgetriebes bildendes Verteilergetriebe, vorzugsweise mit einer Übersetzung 1 : 1 vorgesehen, über das der Antrieb der Hydrostatpumpe erfolgt. Hierdurch wird ein optimaler und nur wenig Raum beanspruchender Einbau der Hydrostatpumpe möglich, wobei in einer vorteilhaften Weiterbildung nach Anspruch 6 das Verteilergetriebe in der Zapfwelle eingebaut ist.

Weitere Vorteile, Einzelheiten und Merkmale der Erfindung ergeben sich aus dem nachfolgend anhand von Zeichnungen dargestellten Ausführungsbeispiel. Dabei zeigen

Figur 1:    ein erfindungsgemässes Fahrzeug in schematischer Seitenansicht;

- 8 -

Figur 2:  das Fahrzeug nach Figur 1 in eine
schematische Schnittansicht längs
der Linie II - II in Figur 1;

Figur 3:  eine schematische Ansicht der Antriebseinrichtung.

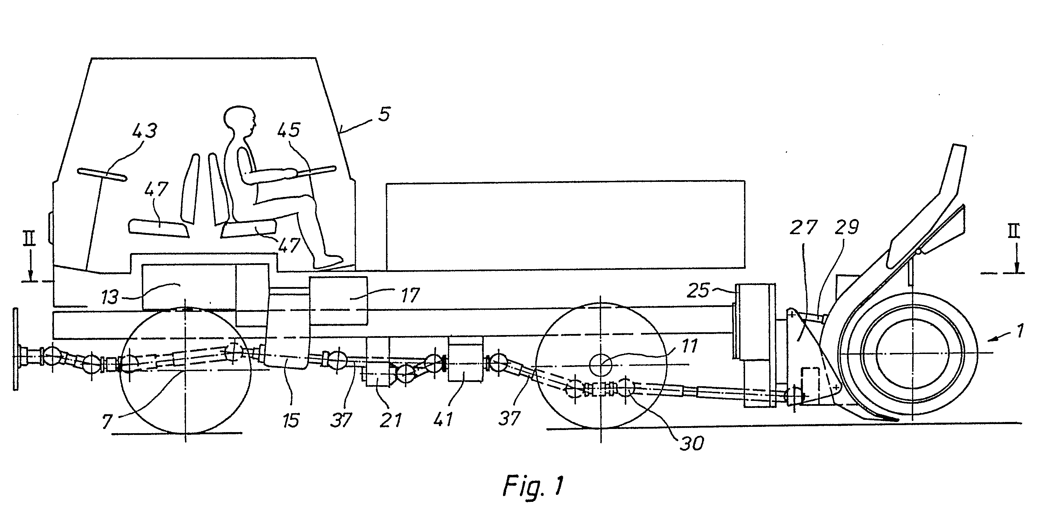

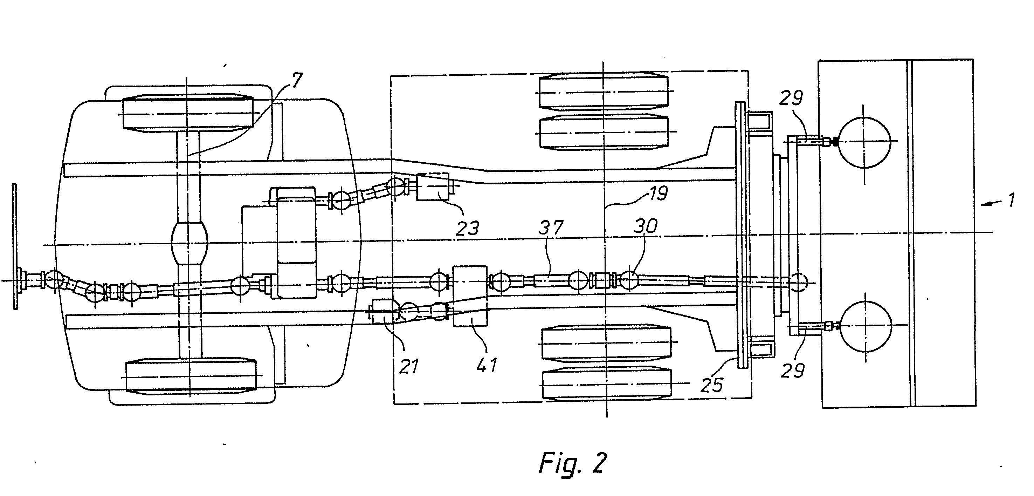

Im folgenden wird auf die Figuren 1 und 2 Bezug genommen, in denen ein Fahrzeug zum Anbau eines schweren
Arbeitsgerätes 1, im gezeigten Ausführungsbeispiel
in Form einer Schneefräse dargestellt ist. Das Fahrzeug umfaßt ein Chassis 3 eines serienmässigen Lastkraftwagens mit einer benachbart unterhalb einer
Fahrerkabine 5 angeordneten gelenkten Fahrzeugachse 7. Die hintere Fahrzeugachse 11 ist im gezeigten
Ausführungsbeispiel als nichtlenkbare Achse ausgebildet.

Unterhalb der Fahrerkabine 5 ist, wie in den Figuren 1 bis 3 nur schematisch dargestellt ist, ein Primärantriebsmotor, beispielsweise ein serienmässiger
Dieselmotor vorgesehen. Über diesen Primärantriebsmotor 13 erfolgt über ein Umschaltgetriebe 15 der
weitere Abtrieb auf ein Wechselgetriebe 17 und von
dort über ein Verteilergetriebe 19 entsprechend den
Anforderungen beispielsweise sowohl auf die Vorderals auch die Hinterachse.

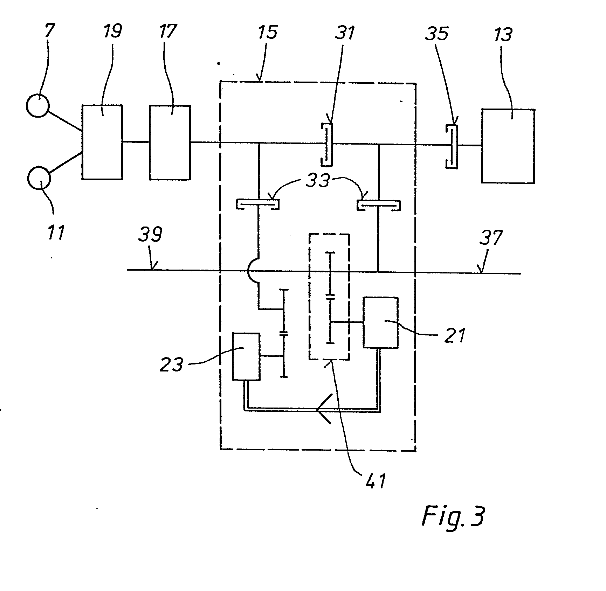

Wie sich dabei aus der schematischen Darstellung
nach Figur 3 ergibt, wird im konventionellen Fahr-

- 9 -

Firma Martin Beilhack          120 P 115

- 9 -

betrieb, also nicht im Arbeitseinsatz über den Primärantriebsmotor 13 unter Umgehung der Hydrostatpumpe
21 und des Hydrostatmotors 23 des Umschaltgetriebes 15 das Wechselgetriebe 17 direkt angetrieben.

Am hinteren Ende des Fahrzeuges ist eine Anbauplatte 25 vorgesehen, an der mittels einer nicht
näher gezeigten Schnellwechseleinrichtung in an
sich bekannter Weise ein schweres Arbeitsgerät angebaut werden kann. Dazu weist das Arbeitsgerät 1
einen Anbauarm 27 mit Hubzylinder 29 auf, über die
das Arbeitsgerät gehoben und um eine in Längsrichtung verlaufende Achse verschwenkt werden kann.
Das Arbeitsgerät, beispielsweise eine Schneefräse,
kann somit in üblicher Weise ausgebildet sein und
bildet keinen Bestandteil der Erfindung. Der Antrieb
der Schneefräse erfolgt über einen Zapfwellenanschluß 30.

Im Arbeitseinsatz des Fahrzeuges mit angetriebener
Schneefräse wird, wie insbesondere aus Figur 3 hervorgeht, die Kupplung 31 geöffnet und die Kupplungen
33 geschlossen, so daß der Antrieb von dem Primärantriebsmotor 13 über eine Hauptkupplung 35, über den
Hydraulikwandler mit der Hydrostatpumpe 21 und dem
Hydrostatmotor 23 erfolgt. Darüber hinaus ist eine
zum rückwärtigen Ende des Fahrzeuges vorgesehene
Zapfwelle 37 und eine weitere zum vorderen Ende des
Fahrzeuges verlaufende Zapfwelle 39 zum Betrieb
beispielsweise einer leichteren Schneeschleuder oder

- 10 -

- 10 -

Schneefräse vorgesehen, die antriebsmaschinen-drehzahlabhängig angetrieben werden. In dem in Figur 3 nur schematisch gezeigten Beispiel erfolgt der Antrieb der Hydrostatpumpe 21 über ein Verteilergetriebe 41, das Teil des Umschaltgetriebes 15 ist. In dem in Figur 2 gezeigten Ausführungsbeispiel ist das Verteilergetriebe 41 ausserhalb des Umschaltgetriebes 15 im Bereich der rückwärtigen Zapfwelle 37 angeordnet, wodurch sich ein einfacher und raumsparender Aufbau ergibt.

Im Arbeitseinsatz wird also das am rückwärtigen Ende angebaute Arbeitsgerät über die Zapfwelle 37 und den Zapfwellenanschluß 30 antriebsmaschinen-drehzahlabhängig angetrieben, während die Fahrzeug-geschwindigkeit über den Hydrostatwandler geregelt wird.

Wie aus Figur 1 und 2 zu ersehen ist, ist eine einzige Fahrerkabine 5 im Bereich der gelenkten Fahrzeugachse 11 mit zwei Lenkeinrichtungen 43 und 45 vorgesehen, wobei die in Vorwärtsrichtung ausgerichtete Lenkeinrichtung 43 zur Lenkung des Fahrzeuges beim konventionellen Fahrbetrieb, also nicht im Einsatz des hinten angeordneten Arbeitsgerätes dient. Über diese Lenkeinrichtung 43 kann auch dann eine Lenkung des Fahrzeuges erfolgen, wenn beispielsweise eine leichtere Schneefräse am vorderen Ende des Fahrzeuges angebaut und über die vordere Zapfwelle 39 angetrieben wird. Während des Arbeitseinsatzes beim Anbau eines schweren

- 11 -

Firma Martin Beilhack                    120 P 115

- 11 -

Arbeitsgerätes am hinteren Ende des Fahrzeuges wird dieses über die zweite, nach hinten ausgerichtete Lenkeinrichtung 45 gelenkt, wodurch sich sehr gute Lenkungseigenschaften während des Arbeitseinsatzes erzielen lassen. Da darüber hinaus zahlreiche serienmässige Fahrerkabinen auf dem Markt erhältlich sind, bedarf es zum Einbau in das erfindungsgemässe Fahrzeug nur einer geringfügigen Anpassung, so daß dadurch ebenfalls die Kosten minimiert werden. Darüber hinaus ist für jede Lenkeinrichtung auch ein separater, entsprechend ausgerichteter Fahrersitz 47 mit den dazugehörigen Bedien- und Überwachungselementen wie z. B. Brems-, Gas- und Kupplungspedal, Schaltknöpfe für Licht, Scheibenwischer etc. vorgesehen. Als besonders vorteilhaft und kostengünstig erweist sich darüber hinaus, daß die zweite Lenkeinrichtung mit den dazugehörigen Bedien- und Überwachungsfunktionen auf dem Fahrzeug fest, also nicht verschieb- und hebbar installiert ist.

Da der gesamte Laderaum auf dem Chassis 3 unbebaut bleibt, kann das Fahrzeug jederzeit auch für andere Einsatzbereiche und zum Transport von Waren und Gütern verwendet werden.

Abschließend wird noch auf einige Ergänzungen und Abwandlungen des in den Figuren 1 bis 3 gezeigten Ausführungsbeispieles der Erfindung eingegangen.

Zusätzlich zu dem gezeigten Ausführungsbeispiel sind die vorderen und rückwärtigen Zapfwellen 39 und 37 unabhängig voneinander zu- und abschaltbar.

Firma Martin Beilhack                    120 P 115

- 12 -

Somit kann im Arbeitseinsatz sowohl in Vorwärtsrichtung, wenn vorne ein antreibbares Arbeitsgerät angebaut ist, wie in Rückwärtsfahrtrichtung,
wenn hinten ein schweres Arbeitsgerät angehängt
ist, der Antrieb der Räder vom Primärantriebsmotor
13 über das Hydrostatgetriebe erfolgen, wobei wahlweise die nicht benötigte Zapfwelle abgeschaltet
wird.

Ferner kann es sich auch als günstig erweisen, die
vordere und rückwärtige Zapfwelle 39 und 37 nicht auf
einen Wellenstrang, sondern zueinander versetzt
anzuordnen, sodaß z.B. die Hydrostatpumpe 21 in
Verlängerung der rückwärtigen Zapfwelle 37 an der
Stelle der vorderen Zapfwelle 39 liegt und die
vordere Zapfwelle 39 über ein Zwischenzahnrad angetrieben wird und beispielsweise die Lage der in
Fig. 3 gezeigten Hydrostatpumpe 21 einnimmt. Durch
entsprechende Einrichtungen ist es hierdurch besonders leicht möglich, eine Drehrichtungsumkehrung
für die vordere und rückwärtige Zapfwelle 39 und 37
vorzusehen.

. Patentanwalt Dipl.-Phys. Flach, Max-Josefs-Platz 6, D-8200 Rosenheim .

**ROSENHEIM**
Dipl.-Phys. Dieter Flach
Max-Josefs-Platz 6
D-8200 Rosenheim
Telefon: (0 80 31) 1 93 52
Telegramm: Physicist Rosenheim

**MÜNCHEN**
Dipl.-Chem. Dr. Steffen Andrae
Dipl.-Ing. Dietmar Haug
Dipl.-Ing. Dr. Dieter Otto
Steinstraße 44
D-8000 München 80
Telefon: (0 89) 48 20 89
Telegramm: pagema München
Telex: 5 216 281 afho d

Firma Martin Beilhack Maschinenfabrik und Hammerwerk
GmbH, Am Hammer 11 - 13, 8200 Rosenheim

120 P 115

---

Fahrzeug für anbaubares schweres Arbeitsgerät

---

Ansprüche:

1. Fahrzeug für anbaubares schweres Arbeitsgerät (1),
insbesondere Schneeräumgerät, mit einer im Bereich
eines Fahrzeugendes auf eine Fahrzeugachse (7) wirkenden Radlenkung und mit einer Fahrerkabine (5),
welche benachbart der gelenkten Fahrzeugachse (7)
vorgesehen ist, und mit einer in Vorwärtsfahrtrichtung ausgerichteten Lenkeinrichtung (43) für die gelenkte Fahrzeugachse (7), wobei das Arbeitsgerät (1)
auf dem zu der lenkbaren Fahrzeugachse (7) gegenüber-

- 01 -

Firma Martin Beilhack                    120 P 115

liegende Ende des Fahrzeuges anbaubar ist, mit
einer zusätzlichen Lenkeinrichtung (45) und zusätzlichen Bedien- und Überwachungselementen für
die gelenkte Fahrzeugachse (7), die in Rückwärtsfahrtrichtung ausgerichtet ist, und mit einem
Primärantriebsmotor (13) zum Antrieb des Fahrzeuges sowie des Arbeitsgerätes (1), dadurch gekennzeichnet, daß das Fahrzeug im wesentlichen aus
einem serienmäßigen Nutzfahrzeug besteht, wobei
die zweite Lenkeinrichtung (45) mit den dazugehörigen Bedien- und Überwachungselementen unmittelbar
in der Nähe der ersten Lenkeinrichtung (43), jedoch auf das rückwärtige Ende des Fahrzeuges versetzt angeordnet ist, daß als Primärantriebsmotor
(5) die im Nutzfahrzeug vorzugsweise unter dem
Fahrerhaus vorgesehene Verbrennungskraftmaschine
dient, und daß der Antrieb des Arbeitsgerätes (1)
unmittelbar über die Verbrennungskraftmaschine
erfolgt.

2. Fahrzeug nach Anspruch 1, dadurch gekennzeichnet,
daß beide Lenkeinrichtungen (43, 45) und die dazugehörigen Bedien- und Überwachungselemente in
einer einzigen Fahrerkabine (5) untergebracht sind.

3. Fahrzeug nach Anspruch 1 oder 2, dadurch gekennzeichnet, daß der Antrieb der vorderen und/oder
hinteren Fahrzeugachse (7, 11) über ein Umschalt-
und ein Wechselgetriebe (15, 17) erfolgt, und
im Kriechgang die Triebverbindung von der Verbrennungskraftmaschine (Primärantriebsmotor 13)
zum Wechselgetriebe (17) ausschließlich über
das einen Hydrostatantrieb (Hydrostatpumpe 21,
Hydrostatmotor 23) umfassende Umschaltgetriebe
(15) mit einer davon ausgehenden Zapfwelle (37)
zum Antrieb des Arbeitsgerätes (1) erfolgt, wobei die Zapfwelle (37) zum hinteren Ende des Fahrzeuges geführt ist.

4. Fahrzeug nach einem der Ansprüche 1 bis 3, dadurch gekennzeichnet, daß in entgegengesetzter Verlängerung der zum hinteren Ende führenden Zapfwelle (37) eine zweite, in Richtung auf die Fahrerkabine (5) führende Zapfwelle (39) vorhanden ist.

5. Fahrzeug nach einem der Ansprüche 1 bis 4, dadurch gekennzeichnet, daß ein separates beziehungsweise ein Teil des Umschaltgetriebes (15) bildendes Verteilergetriebe (41), vorzugsweise mit einer Übersetzung 1:1 vorgesehen ist, über das der Antrieb der Hydrostatpumpe (21) erfolgt.

6. Fahrzeug nach einem der Ansprüche 1 bis 5, dadurch gekennzeichnet, daß das Verteilergetriebe (41) zum Antrieb der Hydrostatpumpe (21) derart angeordnet ist, daß der Antrieb der Hydrostatpumpe (21) über die rückwärtige Zapfwelle (37) erfolgt.

0097732

Fig. 1

0097732

Fig. 2

3/3

0097732

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 62 D 1/22 |
| A,D | DE-B-2 429 005 (M. BEILHACK MASCHINENFABRIK UND HAMMERWERK GMBH) <br> * Anspruch 1; Spalte 4, Zeilen 29-55; Spalte 5, Zeilen 9-33; Figur 1 * | 1 | B 60 K 17/04 |
| | --- | | |
| Y | DE-U-1 744 776 (AHLMANN-CARLSHÜTTE K.G.) <br> * Ganzes Dokument * | 1-3 | |
| | --- | | |
| Y | DD-A- 109 838 (P. KERSTEN et al.) <br> * Anspruch 1; Figur 1 * | 1-3 | |
| | --- | | RECHERCHIERTE SACHGEBIETE (Int. Cl. ³) |
| Y | GB-A- 764 798 (INTERNATIONAL HARVESTER CO.) <br> * Ansprüche 1-3, 5; Seite 1, Zeilen 25-46; Seite 3, Zeilen 66-119; Figur 1 * | 3 | |
| | --- | | B 60 K 17/00 |
| Y | AT-B- 271 214 (VALMET OY) <br> * Seite 2, Zeilen 14-41; Figuren 1, 2 * | 3 | B 62 D 1/22 <br> B 62 D 9/00 |
| | --- | | |
| A | DE-A-2 418 250 (S. SCHÄFFER) <br> * Ansprüche 1, 8, 11, 12; Figuren 1, 2 * | 1,4,5 | |
| | ----- | | |

Der vorliegende Recherchenbericht wurde für alle Patentansprüche erstellt.

| Recherchenort <br> BERLIN | Abschlußdatum der Recherche <br> 31-01-1983 | Prüfer <br> PETTI P |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82